Europäisches Patentamt

(19) European Patent Office

Office européen des brevets

(11) Numéro de publication: **0 159 213**
**B1**

(12) # FASCICULE DE BREVET EUROPÉEN

(45) Date de publication du fascicule du brevet:
12.08.87

(21) Numéro de dépôt: **85400355.5**

(22) Date de dépôt: **26.02.85**

(51) Int. Cl.⁴: **B 23 K 35/22**, B 23 K 35/38, B 23 K 28/00

(54) Gaz pour coupage thermique par plasma d'arc et procédé.

(30) Priorité: **16.03.84 FR 8404046**

(43) Date de publication de la demande:
**23.10.85 Bulletin 85/43**

(45) Mention de la délivrance du brevet:
**12.08.87 Bulletin 87/33**

(84) Etats contractants désignés:
**AT BE CH DE FR GB IT LI LU NL SE**

(56) Documents cité:
**EP-A-0 114 521**
**FR-A-1 455 709**

**PATENTS ABSTRACTS OF JAPAN, vol. 7, no. 203
(M-241) 1348 , 8 septembre 1983
WELDING JOURNAL, vol. 46, no. 8, août 1967, pages
657-664, Miami, Florida, US; G.M. SKINNER et al.:
"High quality plasma arc cutting and piercing"**

(73) Titulaire: **L'AIR LIQUIDE, SOCIETE ANONYME
POUR L'ETUDE ET L'EXPLOITATION DES
PROCEDES GEORGES CLAUDE, 75, Quai d'Orsay,
F-75321 Paris Cedex 07 (FR)**

(72) Inventeur: **Larue, Jean-Pierre, 21 bis, avenue de
la Muette, F-95520 Osny (FR)**
Inventeur: **Duboz, Georges, 10, rue Joseph
Liouville, F-75015 Paris (FR)**
Inventeur: **Carsac, Claude, 14, rue du Plessis,
F-95320 Saint-Leu-La-Foret (FR)**
Inventeur: **Marhic, Gérard, 16 D, Maradas Verts,
F-95000 Cergy (FR)**

(74) Mandataire: **Bouton Neuvy, Liliane, L'Air liquide,
Société Anonyme pour L'Etude et L'Exploitation
des Procédés Georges Claude 75, Quai d'Orsay,
F-75321 Paris Cedex 07 (FR)**

LIBER, STOCKHOLM 1987

## Description

La présente invention a pour objet un procédé de coupage thermique dans le domaine du coupage par plasma d'arc.

Les gaz ou mélanges de gaz plasmagènes constitués d'argonhydrogène ou azote, et éventuellement des trois constituants sont pratiquement connus depuis l'origine du procédé de coupage thermique par plasma d'arc.

Dès 1962, l'oxygène pur et l'air comprimé, comme gaz plasmagènes dans les torches de coupage plasma, ont été proposés sur le marché nord américain. Toutefois, pour des raisons techniques telles la connaissance insuffisante du procédé, des matériels, la tenue des électrodes, et des raisons commerciales, l'utilisation de ces gaz plasmagènes qui étaient plus spécialement préconisés pour l'acier doux n'a pas eu le développement immédiat attendu.

La première publication rélative à des essais de coupage plasma effectués en laboratoire avec des mélanges azote-oxygène dans des proportions variables et différentes de l'air est due aux travaux de O'Brien, exposés durant la réunion annuelle de l'American Welding Society, Detroit (Michigan) 4 au 8 mai 1964. L'auteur a montré les avantages d'un enrichissement en oxygène en fournissant plusieurs courbes de vitesse par rapport à l'épaisseur à couper et à l'intensité d'arc. Il a communiqué également les données relatives à la chute de durée de vie des électrodes lorsque l'on augmente ce même pourcentage. Le cette étude, l'auteur concluait que le mélange azote-oxygène 80/20/%, c'est-à-dire l'air comprimé constitue le meilleur compromis.

Plus tard, vers 1970, les cherchers de l'Institut Von Ardenne, et ensuite de nombreux autres techniciens réaliseront des équipements utilisant, soit l'air comprimé, soit l'oxygène pur à l'exclusion de tout autre mélange.

Il est bien connu que la durée de vie des électrodes utilisées en coupage plasma air comprimé, bien que courte, reste néanmoins supérieure à celle des tuyères beaucoup plus sujettes à l'érosion de l'arc, aux amorçages, aux projections, voire aux incidents... L'expérience du métier montre alors que les utilisateurs amenés à remplacer la tuyère usagée changent, par précaution, également l'électrode afin de reprendre le travail avec un "couple" électrode-tuyère neuf, et vice-versa.

Par exemple, avec l'air comprimé, ou un mélange azote- oxygène 20/21 %, correspondant au meilleur compromis proposé, la durée de vie de la tuyère est approximativement la moitié de la durée de vie de l'électrode.

On a recherché dans le coupage thermique, un gaz plasmagène présentant des avantages substantiels par rapport à l'utilisation de l'air comprimé, notamment dans le secteur des performances telles que vitesse de coupé, qualité de coupe, facilité opératoire, dans le secteur de la sécurité de fonctionnement et également dans celui de la sécurité d'approvisionnement.

Il est proposé un procédé de coupage thermique par plasma d'arc, selon lequel le gaz plasmagène mis en oeuvre est constitué par le protoxyde d'azote $N_2O$.

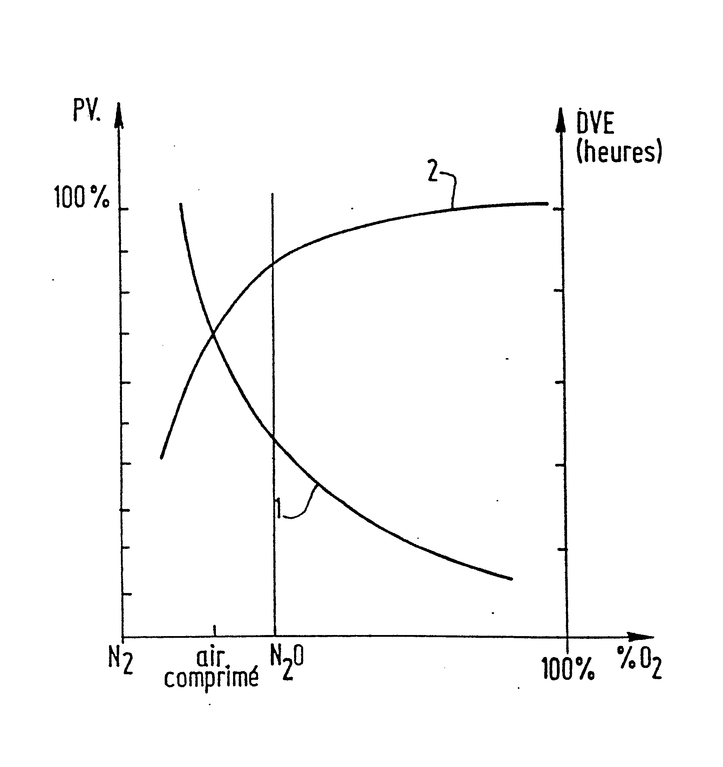

Dans des conditions d'essais bien déterminées, sur la courbe 1 de la figure du dessin annexé, il a été tracé la courbe d'usure des électrodes avec le protoxyde d'azote utilisé comme gaz plasmagène. En abscisses on a porté l'air comprimé et le protoxyde d'azote, la durée de vie des électrodes DVE est indiquée en heures sur l'axe des ordonnées. Cette durée de vie est mesurée sur un banc de coupage automatique avec une torche automatique refroidie par de l'eau. On apprécie l'usure de l'électrode par mesure de la profondeur du cratère formé par l'insert zirconium par les érosions successives de la tache cathodique lors des différents amorçages et temps de coupe; et l'on considère l'électrode comme usée lorsque ce cratère a une profondeur de 2 mm. Les résultats de ces expérimentations ont permis de constater que, lorsque le protoxyde d'azote est utilisé comme gaz plasmagène dans un procédé de coupage de métaux par plasma d'arc, dans l'état actuel de la technique, la durée de vie de l'électrode est très nettement améliorée.

Dans ces conditions, en considération de la courbe de vitesse de coupe donnée sur la courbe 2 de la figure du dessin annexé, l'air comprimé et le protoxyde d'azote ont été portés sur l'axe des abscisses et la performance vitesse PV en ordonnées. Pour ce qui concerne le critère performance, il s'agit de la vitesse de coupe sur acier ordinaire, relevée pour des aspects de coupe de bonne qualité. La courbe est tracée en pourcentage de la vitesse maximale relevée avec l'oxygène pur.

Le procédé de l'invention est applicable dans le coupage thermique de tous les matériaux conducteurs électriques notamment des métaux, en particulier des aciers et plus spécialement des aciers au carbone, présentent des avantages liés à leur emploi par rapport à l'utilisation de l'air comprimé.

Parmi les avantages du procédé de coupage thermique par plasma d'arc mettant en oeuvre du protoxyde d'azote comme gaz plasmagène, dans le secteur des performances, on peut citer une augmentation de la vitesse de coupe de 15 à 35 % par rapport à l'air.

De plus, on a remarqué une nette amélioration de la qualité de coupe, celle-ci plus blanche et plus brillante se présente avec des scories moins adhérentes avec le protoxyde d'azote.

En outre, on a constaté une plus grande facilité opératoire pour les coupes des épaisseurs à la limite des possibilités de l'installation: à épaisseur et vitesses identiques, l'intensité d'arc est plus faible.

Dans le domaine de la sécurité de fonctionnement, la pureté du gaz évite les risques de mauvais fonctionnemént, voire de destruction de torche liée à l'utilisation de gaz impurs du fait de la présence de poussières, de traces d'huile et d'eau,... dont les gaz préconisés dans l'invention sont exempts.

L'utilisation en coupage plasma du gaz plasmagène cité ne connait pas de limitation qui serait liée à son mode de conditionnement en bouteille, cadre, citerne, récipient, conteneur, à l'état en gazeux ou liquide, à température ambiante ou cryogénique.

Le stockage du protoxyde d'azote sous forme liquide, à température ambiante, donne une grande autonomie et une grande mobilité à l'installation. Ce gaz devrait trouver d'importants débouchés en coupage manuel.

**Revendications**

1. Procédé de coupage thermique par plasme d'arc, caractérisé en ce que le gaz plasmagène est constitué par le protoxyde d'azote.

2. Procédé selon la revendication 1, caractérisé en ce que l'on coupe thermiquement par plasma d'arc des matériaux conducteurs électriques.

3. Procédé selon la revendication 1 ou 2, caractérisé en ce que l'on coupe thermiquement par plasma d'arc des métaux.

4. Procédé selon la revendication 3, caractérisé en ce que l'on coupe thermiquement par plasma d'arc des aciers.

**Patentansprüche**

1. Verfahren zum thermischen Plasmalichtbogenschneiden, **dadurch gekennzeichnet**, daß das plasmagene Gas aus Lachgas besteht.

2. Verfahren nach Anspruch 1, **dadurch gekennzeichnet,** daß man mit dem Lichtbogen elektrisch leitende Materialien thermisch schneidet.

3. Verfahren nach Anspruch 1 oder 2, **dadurch gekennzeichnet,** daß man mit dem Lichtbogen Metalle thermisch schneidet.

4. Verfahren nach Anspruch 3, **dadurch gekennzeichnet,** daß man mit dem Lichtbogen Stähle thermisch schneidet.

**Claims**

1. Process for thermal plasma arch cutting, **characterized in** that the plasmagenic gas consists of nitrous oxide.

2. Process according to claim 1, **characterized in** that by plasma arch electrically conductive materials are thermally cut.

3. Process according to claim 1 or 2, **characterized in** that by plasma arch metals are thermally cut.

4. Process according to claim 3, **characterized in** that by plasma arch steels are thermally cut.